# FASCICULE DE BREVET EUROPEEN

(11) **EP 3 562 696 B1**
(45) Date de publication et mention de la délivrance du brevet: **10.02.2021**
(21) Numéro de dépôt: 17840485.1
(22) Date de dépôt: 21.12.2017
(51) Int. Cl.: B60J 5/10, B60J 5/04

(54) **HAYON DE VÉHICULE**
FAHRZEUGHECKKLAPPE
VEHICLE TAILGATE

(30) Priorité: 30.12.2016 CN 201621493549 U
(43) Date de publication de la demande: 06.11.2019
(73) Titulaire: Compagnie Plastic Omnium, 69007 Lyon (FR)
(72) Inventeur: PAGNY, Philippe, 01500 Ambronay (FR); SEYMAT, Laurent, 38980 Viriville (FR); DEPARDON, Pascal, 01800 Meximieux (FR); GALLE, Pierre-Anthony, 69130 Ecully (FR)
(74) Mandataire: LLR
(86) Numéro de dépôt international: PCT/FR2017/053786
(87) Numéro de publication internationale: WO 2018/122512

(56) Documents cités:
- CN-U- 205 573 572
- JP-A- 2005 022 581
- US-A- 4 773 700

## Description

La présente invention concerne le domaine technique des hayons de véhicules, notamment des hayons en matière plastique.

Les hayons en matière plastique de véhicule comportent usuellement des panneaux internes constituant des parties structurelles et des panneaux externes constituant des peaux d'aspect. Parfois, les hayons de véhicules comportent également des unités optiques arrangées sur les deux extrémités gauche et droite d'un hayon, appelés feux arrières.

L'apparence des hayons est diverse en fonction des styles variés de véhicules. Dès lors, l'apparence des feux arrière intégrés sur les hayons est également très diverse. Ainsi, des logements sont prévus sur les hayons afin de recevoir les unités optiques ; la forme de ces logements doit être conçue au moins pour pouvoir servir d'interface d'intégration et de fixation des unités optiques ; elle doit en outre être conforme au style des hayons.

Outre des exigences en termes de qualités esthétiques, il existe des contraintes importantes d'étanchéité (notamment étanchéité à l'eau) à l'intérieur des hayons, car le volume interne des hayons comprend des équipements électriques. De ce fait, il est connu d'assurer l'étanchéité à l'eau des hayons au moyen d'un cordon de collequi permet d'assembler un panneau interne avec un panneau externe et qui forme une piste continue d'étanchéité sur tout le périmètre, et notamment au niveau des logements des feux arrière. Ce cordon de colleest en général constitué d'une colle appliquée sur la face interne du panneau externe. Du fait des besoins de la production de masse des véhicules, le cordon de colle est habituellement appliqué par un robot. L'assemblage par collage impose qu'une direction d'amenée des panneaux interne et externe soit compatible avec les formes tridimensionnelles générales des hayons et de la piste de collage, de façon à éviter toute interférence par exemple liée à des formes relatives en contre-dépouille. Il est souhaité en outre de pouvoir déposer le cordon de colle partout, même sur des formes très complexes, tout en facilitant l'accès de l'applicateur de colle déplacé par le robot. Afin d'assurer la continuité de la piste imposée par ces contraintes d'étanchéité, il est connu d'ajouter des parois supplémentaires dites « pontet » sur certaines zones du hayon, de façon à améliorer la continuité de la piste de collage. Une solution consiste à utiliser des pontets rapportés aux panneaux externes, par exemple voir la demande WO2009056775 au nom de la présente demanderesse. Une autre solution consiste à obtenir ces pontets directement par moulage, lors de l'injection des panneaux externes, par exemple voir le brevet CN205573572U au nom de la présente demanderesse. Selon ce brevet, des parois supplémentaires formant un pontet sont ajoutées à des parois formant des angles d'environ 90° ou de moins de 90° qui entourent les logements de feux arrière et qui sont sur la face interne du panneau externe.

Cependant, la solution qui consiste à rapporter des parois supplémentaires formant un pontet sur un panneau externe est très complexe, et n'est pas favorable d'un point de vue économique et industriel. L'autre solution qui consiste à mouler des parois d'un pontet avec un panneau externe n'a pas le même problème, mais cette solution risque de générer facilement des défauts d'aspect sur la face visible du panneau externe. Ces défauts d'aspect dûs au moulage par injection peuvent par exemple être de type retassure ou ligne de flux et situés au niveau de la jonction des parois du pontet avec la face interne du panneau externe. Ceci a dès lors un effet négatif sur la qualité perçue du véhicule. Dans le domaine du moulage de matière plastique, les défauts visuels constituent un problème bien connu. Afin d'atténuer ces défauts visuels, une solution connue consiste, en fonction des possibilités de conception technique et en particulier des formes de style du véhicule, à positionner la jonction des parois du pontet sur le panneau externe en regard ou à proximité des lignes de style ou des bords du véhicule, de façon à ce que les défauts visuels causés par la jonction soient moins visibles. Ou bien il est possible de réaliser un amincissement local de l'épaisseur de paroi du pontet à proximité de la jonction des parois du pontet avec la face interne du panneau externe.

Malgré tout, ces solutions connues ne permettent pas de supprimer totalement les défauts visuels. Étant donné que les défauts visuels sont issus de la jonction entre des parois d'un pontet et une face interne d'un panneau externe, il est connu de profiter du mouvement d'un pavé mobile dans un moule afin de supprimer cette jonction, autrement dit, de faire en sorte que les parois du pontet n'entrent pas localement en contact avec la face interne du panneau externe. Le mouvement du pavé mobile est utile pour pouvoir démouler des cavités formées lors du moulage des panneaux externes. Cependant, l'absence de contact entre les parois du pontet et la face interne du panneau externe génère une discontinuité de la piste de collage et donc de l'étanchéité entre le panneau interne et le panneau externe du hayon: il faut donc procéder autrement.

Ainsi, selon l'invention, il est envisagé d'ajouter, en plus d'un cordon de colleconventionnel, un cordon de collelocal au niveau d'un jeu entre des parois d'un pontet et une face interne d'un panneau externe. Le jeu correspond à la discontinuité volontaire générée au pied de la paroi de pontet, situé à proximité de la face intérieure du panneau externe. Dès lors, sur la base du procédé conventionnel d'assemblage par collage des deux panneaux externe et interne, les fonctions conventionnelles de collage et d'étanchéité sont réalisées par un cordon de colleprincipal (et de préférence unique), alors que la fixation par collage et surtout l'étanchéité à l'eau entre la face interne du panneau externe et les extrémités libres des parois du pontet, qui ne sont pas en contact avec la face interne du panneau externe, sont assurées par un cordon de collesupplémentaire qui vient remplir le jeu évoqué précédemment.

Un objet de la présente invention consiste ainsi à proposer un hayon en matière plastique de véhicule, le hayon comprenant un panneau interne, un panneau externe et un premier cordon de colle appliqué entre le panneau interne et le panneau externe de manière à assembler par collage les deux panneaux et à créer entre les deux panneaux un volume intérieur étanche à l'eau, le panneau externe comprenant une peau ayant une surface d'aspect, un logement pour recevoir une unité optique qui est délimité par une paroi périphérique reliée à la peau, et une cavité délimitée à la fois par la peau, au moins une partie de la paroi périphérique du logement et des parois faisant saillie du logement vers la face interne de la peau. Selon la présente invention, au moins une des parois faisant saillie du logement vers la face interne de la peau qui participent à délimiter la cavité ne touche pas la face interne de la peau, de sorte qu' il existe un jeu entre ladite au moins une paroi et la face interne de la peau, et un second cordon de colle est appliqué au niveau du jeu pour l'étanchéifier et ainsi assurer l'étanchéité à l'eau de la cavité.

On entend par « peau » la partie plane principale du panneau externe ne comprenant pas de logement ou de trou pour une pièce rapportée telle qu'une unité optique ou une lunette arrière.

Dans un hayon selon l'invention, les parois faisant saillie du logement vers la face interne de la peau, qui participent à délimiter la cavité, peuvent comprendre une paroi de pontet et une paroi latérale. La paroi de pontet recouvre un angle formé par le logement et la face interne de la peau, et ainsi le premier cordon de colle évite cet angle et est déposé sur la paroi de pontet, ce qui facilite sa dépose avec un robot. La paroi latérale ferme la cavité sur au moins un côté de la cavité et elle peut se trouver sur une face latérale du hayon lorsqu'un pavé mobile se déplace, lors du moulage de la cavité, suivant l'axe Y en direction du plan médian Y₀ du véhicule, ou bien se trouver sur un côté de la cavité en regard de la face latérale du hayon (ce côté est plus proche du plan médian Y₀) lorsque le pavé mobile se déplace, lors du moulage de la cavité, suivant l'axe Y vers les deux plans latéraux Yₗₐₜ du véhicule. Le jeu peut être présent entre la paroi de pontet et la face interne de la peau, ou entre la paroi latérale et la face interne de la peau, ou entre la face interne de la peau et à la fois la paroi de pontet et la paroi latérale. En particulier, lorsque la paroi latérale se trouve sur la face latérale du hayon, étant donné que la paroi latérale constitue une partie de la peau, il n'existe pas de jeu entre la paroi latérale et la face interne de la peau.

On note que dans le contexte de l'invention, les qualificatifs de « interne » et « externe » s'entendent par rapport à l'intérieur et à l'extérieur du véhicule. Par ailleurs, la référence à des termes d'orientation, tels que « axe longitudinal X », « axe transversal Y », « axe vertical Z », « avant », « arrière », « au-dessus », « supérieure », « en dessous », « inférieure » etc. Ces termes s'entendent par référence à l'orientation usuelle des véhicules automobiles.

Avantageusement, le jeu se trouve derrière ou à proximité d'une ligne de style qui est visible sur la surface d'aspect de la peau. Cela permet de rendre moins visible les défauts visuels qui sont toujours éventuellement générés.

Avantageusement, le premier cordon de colleet le second cordon de collesont appliqués de telle sorte qu'ils sont déposés l'un dessus l'autre (c'est-à-dire qu'ils se chevauchent) et se croisent, et leur ordre ascendant et descendant du chevauchement peut être interchangeable. Usuellement, le premier cordon de colle est appliqué sur la face interne du panneau externe et forme une fixation continue d'étanchéité. Le premier cordon de colle et le second cordon de colle sont avantageusement formés de colle thermoplastique ou thermodurcissable, étanche à l'eau, et appliquée par un robot.

Dans une autre variante de réalisation d'un hayon selon l'invention, il est possible que, parmi une de des parois de la cavité, l'épaisseur à l'extrémité libre de ladite paroi qui ne touche pas la face interne de la peau (c'est-à-dire une extrémité « suspendue » en raison de la présence du jeu) soit amincie pour faciliter un passage du second cordon de colle sous l'extrémité libre, de manière à mieux assurer 1 ' étanchéité à l'eaude part et d'autre de la paroi en question. L'amincissement est avantageusement situé sur la face externe (orientée vers le panneau interne) de la paroi de ponter ou de la paroi latérale. Alternativement, parmi ces parois, l'extrémité libre de ladite au moins une paroi qui ne touche pas la face interne de la peau peut former une rainure pour recevoir le second cordon de colle.

Les figures annexées illustrent de façon schématique des modes de réalisation préférables mais non limitatifs de l'invention qui ne sont donnés qu'à titre d'exemple. À l'aide de ces figures annexées et à la lecture de la description détaillée ci-après, les avantages et les caractéristiques de l'invention deviennent clairement apparents, et l'invention sera mieux comprise. On note que les directions, formes, angles, dimensions (comprenant longueurs et épaisseurs), distances et proportions illustrés dans les figures annexées ne sont donnés qu'à titre indicatif et ne sont en aucun cas limitatifs pour l'invention. Parmi ces figures :
- la figure 1 montre de façon schématique une vue générale d'un hayon vue de l'arrière d'un véhicule, dans laquelle les directions X, Y et Z du véhicule sont illustrées de façon indicative ;
- la figure 2 montre de façon schématique une vue éclatée en trois dimensions de la zone partielle d'un feu arrière entourée d'un cercle dans la figure 1 ;
- la figure 3 montre de façon schématique une vue en trois dimensions du panneau interne de la figure 2 ;
- la figure 4 montre de façon schématique une vue en trois dimensions du panneau interne de la figure 3 sur lequel est appliqué le premier cordon de colle ;
- la figure 5 montre de façon schématique une vue en trois dimensions du panneau externe de la figure 2 ;
- la figure 6 montre de façon schématique sous un autre angle une vue en trois dimensions du panneau externe de la figure 5 ;
- la figure 7 montre de façon schématique sous encore un autre angle une vue en trois dimensions du panneau externe de la figure 5 ;
- la figure 8 montre de façon schématique une vue en trois dimensions de la face interne du panneau externe de la figure 7 sur laquelle est appliqué le premier cordon de colle ;
- la figure 9 montre de façon schématique une vue en trois dimensions de la face interne du panneau externe de la figure 8 sur laquelle est appliqué le second cordon de colle.

Des modes de réalisation préférables d'un hayon selon l'invention sont décrits ci-après, en faisant référence aux figures annexées dans lesquelles les références numériques identiques sont utilisées pour désigner des éléments similaires ayant des fonctions similaires.

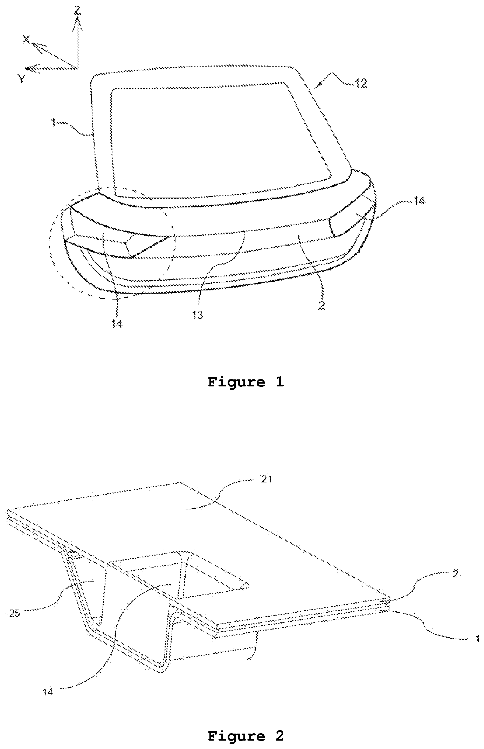

La Figure 1 montre de façon schématique une vue générale d'un hayon 12 vue de l'arrière d'un véhicule, dans laquelle une partie du panneau externe 2 du hayon 12 est enlevée de façon à faire apparaître le panneau interne 1 vis-à-vis de cette partie, et les directions X, Y et Z du véhicule sont illustrées de façon indicative. Ce hayon est conçu de façon à comprendre des logements 14 destinés à recevoir des unités optiques (des feux arrière). Dans ce mode de réalisation, les feux arrière sont par exemple disposés de façon symétrique sur les deux bords latéraux du hayon. Étant donné que le style d'aspect des véhicules est très variable, la forme des logements 14 situés sur le hayon peut également varier beaucoup. Cette forme peut par exemple être très profonde et avoir des parois abruptes qui forment des angles sensiblement droits voire aigus avec la surface d'aspect du hayon (visible de l'extérieur du véhicule) ou avec le fond des logements.

Comme le montre la figure 2 qui constitue une vue éclatée de la zone partielle d'un feu arrière montré à la figure 1, le hayon 12 comporte un panneau interne 1 et un panneau externe 2. Généralement, le panneau interne 1 est une pièce structurelle du véhicule, qui est également appelée doublure, tandis que le panneau externe 2 est une pièce d'aspect. Par exemple, le panneau interne 1 est un cadre de hayon fabriqué en plastique thermoplastique (tel que du polypropylène - PP) ou thermodurcissable qui est de préférence du SMC (« Sheet Molding Compound » en anglais) ; le panneau externe 2 est la peau d'aspect du hayon qui est fabriquée en matériau thermoplastique, par exemple du polypropylène. Les panneaux interne et externe ont souvent des formes tridimensionnelles complexes qui ne sont bien entendu pas limitées aux formes illustrées de façon indicative dans les figures annexées.

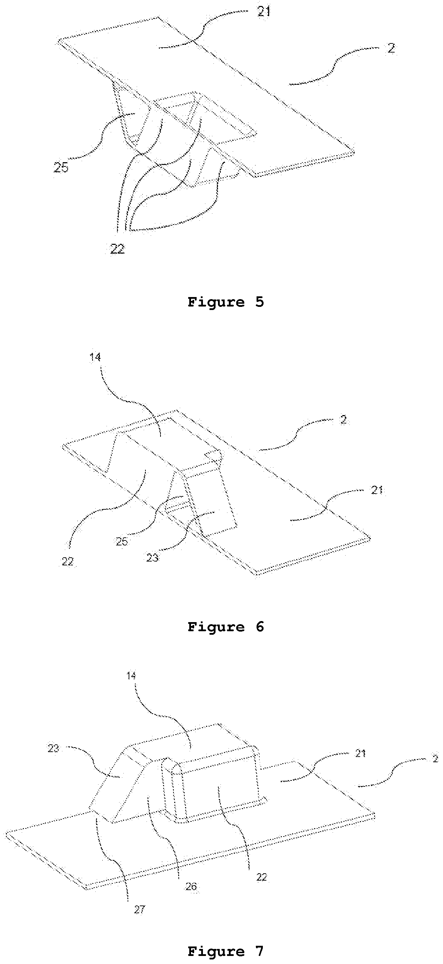

Comme on peut le voir sur les figures 2 et 5 à 9, le panneau externe 2 comprend une peau 21 formant la surface d'aspect et au moins un logement 14 pour recevoir une unité optique. On peut voir sur la figure 5 que le logement 14 est délimité par une paroi périphérique 22 reliée à la peau 21. On peut voir sur les figures 2, 5 et 6 que le panneau externe 2 comprend une cavité 25 délimitée à la fois par la peau 21, la paroi périphérique 22 du logement 14 et des parois faisant saillie du logement 14 vers la face interne de la peau 21. Les parois qui font saillie du logement 14 vers la face interne de la peau 21 et qui participent à délimiter la cavité 25 comprennent une paroi de pontet 23 et une paroi latérale 26. La paroi de pontet 23 est par exemple illustrée sur les figures 6 et 7 et la paroi latérale 26 est par exemple illustrée sur la figure 7. Dans le présent mode de réalisation, la paroi de pontet 23 et la paroi latérale 26 n'entrent pas en contact avec la face interne de la peau 21, de sorte qu'il y a un jeu 27 présent entre l'extrémité (le pied) de la paroi de pontet 23 et la face interne de la peau 21, ainsi qu'entre l'extrémité (le pied) de la paroi latérale 26 et la face interne de la peau 21. On comprend que le jeu 27 n'est pas limité à ce qui est illustré sur les figures et il est par exemple possible qu'il n'y ait du jeu 27 qu'entre la paroi de pontet 23 et la face interne de la peau 21.

Comme le montre la figure 7, la paroi latérale 26 ferme la cavité 25 sur un côté de la cavité 25. Dans l'exemple illustré à la figure 7, la paroi latérale 26 se trouve sur un côté de la cavité en regard de la face latérale du hayon 12 (ce côté est plus proche du plan médian Y₀), ce qui signifie que lors du moulage de la cavité 25, le pavé mobile se déplace suivant l'axe Y vers les deux plans latéraux Yₗₐₜ du véhicule. Un homme du métier comprend (voir ci-après) que de façon alternative, dans le cas où lors du moulage de la cavité, le pavé mobile se déplace suivant l'axe Y vers le plan médian Y₀ du véhicule, la paroi latérale 26 se trouve sur une face latérale du hayon 12. En particulier, lorsque la paroi latérale 26 se trouve sur une face latérale du hayon 12, étant donné que la paroi latérale 26 fait elle-même partie de la peau de cette face latérale, il n'y a pas de jeu entre cette paroi latérale 26 et la face interne de la peau 21, et la paroi latérale 26 est visible lorsque le hayon 12 est levé.

Par ailleurs, on note que parmi la peau 21 du panneau externe 2, la paroi périphérique 22 et la paroi de pontet 23, seule la peau 21 est visible de l'extérieur du véhicule lorsque les unités optiques (par exemple les feux arrière) sont bien installées en place dans les logements 14.

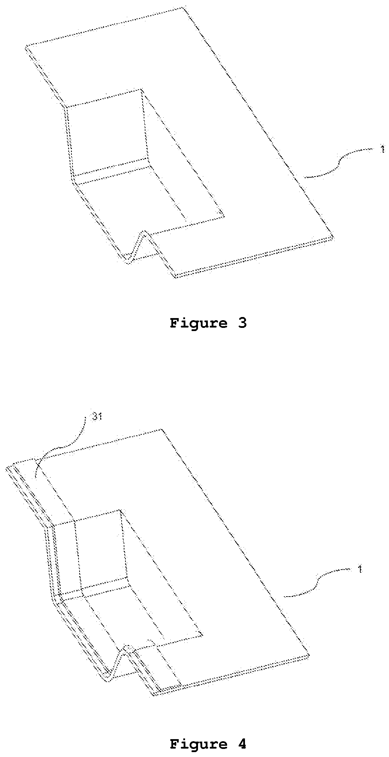

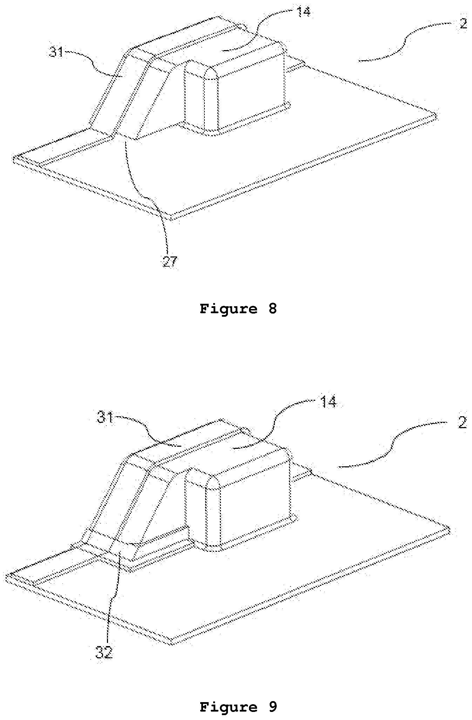

Usuellement, le panneau interne 1 et le panneau externe 2 sont assemblés par collage avec le cordon de colle 31 qui est appelé le premier cordon de colle, et ce cordon de colle 31 est avantageusement utilisé pour étanchéifier le volume interne entre les panneaux interne et externe de sorte que ce volume interne reste sec. Ceci permet de protéger les équipements et les fils électriques qui se trouvent dans le hayon et entre les panneaux interne et externe contre l'humidité. Il est possible d'utiliser un robot pour déposer la colle sur la face interne du panneau externe 2, de façon à former le cordon de colle31, comme le montre la figure 8. Bien entendu, il est également possible d'appliquer le cordon de colle 31 sur la face du panneau interne 1 qui est destinée à être collée au panneau externe 2, comme le montre la figure 4. Ensuite, le panneau externe 2 et le panneau interne 1 sont collés ensemble et une fixation continue d'étanchéité est obtenue en pressant les panneaux interne et externe avec une pression appropriée dans la direction principale d'assemblage du hayon 12. De préférence, cette piste d'étanchéité forme elle-même un circuit fermé. Du fait que la paroi de pontet 23 est utilisée pour couvrir l'angle (le coin) formé par le logement 14 et la face interne de la peau 21 (comme le montre la figure 6), le cordon de colle 31 évite cet angle et passe par la paroi de pontet 23 (comme le montre la figure 8), ce qui permet en conséquence d'améliorer le degré abrupt de la piste de collage, afin de faciliter l'accès de l'applicateur de l'adhésif du robot ainsi que la compression des panneaux interne et externe pour les coller ensemble.

Outre le cordon classique de colle 31, le hayon selon la présente invention se voit utiliser un cordon supplémentaire de colle 32 au niveau du jeu 27 pour étanchéifier le jeu 27 de façon à garantir l'étanchéité à l'eau de la cavité 25, comme le montre la figure 9. Ce cordon supplémentaire de colle 32 peut être qualifié de second cordon de colle, et ainsi le cordon classique de colle 31 peut être qualifié de premier cordon de colle. Le premier cordon de colle 31 et le second cordon de colle 32 sont de préférence appliqués de telle sorte qu'ils se chevauchent et se croisent, et leur ordre ascendant et descendant de chevauchement peut être interchangeable.

En particulier, dans le hayon selon la présente invention, du fait que les défauts visuels tels que retassures ou lignes de flux sont atténués à leur source, en réduisant les jonctions entre la face interne de la peau 21 et les parois 23, 26 qui font saillie du logement 14 vers la face interne de la peau 21 et qui participent à délimiter la cavité 25, il est possible qu'une épaisseur d'une extrémité libre (c'est-à-dire une extrémité « suspendue » en raison de la présence du jeu 27) de la paroi (ou les parois) parmi ces parois qui ne touche (ou touchent) pas la face interne de la peau 21 n'est pas amincie. Cependant, il est préférable que cette épaisseur soit amincie. Par exemple, on peut voir dans la figure 6 que l'extrémité libre de la face externe de la paroi de pontet 23 est amincie. Cet amincissement favorise le passage du second cordon de colle 32 sous cette extrémité libre, de manière à assurer l'étanchéité de part et d'autre de la paroi de pontet 23. Alternativement, la paroi (ou les parois) parmi les parois qui ne touche (ou touchent) pas la face interne de la peau 21 forme (ou forment) une rainure pour recevoir le second cordon de colle 32.

Selon un exemple de réalisation de l'invention, le jeu 27 se trouve derrière ou à proximité d'une ligne de style 13 qui est visible sur la surface d'aspect de la peau 21. Cela permet de masquer et rendre moins visibles les défauts visuels qui, même s'ils sont réduits, peuvent tout de même être générés. Comme le montre la figure 1, cette ligne de style 13 correspond souvent à un pli de la peau 21 du panneau externe 2 et ce pli forme une carre ou une ligne interrompue visuellement sur la surface d'aspect du hayon 12.

Ci-après un procédé pour fabrication d'un hayon selon un mode de réalisation de la présente invention est décrit. Selon ce procédé, lors du moulage du panneau externe 2 du hayon 12, on utilise un pavé mobile dans un moule pour fabriquer la cavité 25 délimitée par la peau 21, la paroi périphérique 22, la paroi de pontet 23 et la paroi latérale 26. Cela permet ainsi de mouler la cavité 25, même s'il n'est plus possible de démouler la cavité 25 naturellement du fait qu'elle est couverte par la paroi de pontet 23. Pour un moulage de type par injection, ce pavé mobile est un noyau rétractable. Le pavé mobile peut être facilement retiré à partir d'un autre côté non fermé de la cavité 25, cet autre côté non fermé étant en regard du côté fermé par la paroi latérale 26 selon un mode de réalisation de la présente invention.

De même, selon le procédé, les principales étapes de l'assemblage par collage du panneau externe 2 avec le panneau interne 1 pour constituer le hayon 12 sont les suivantes :
- on applique une colle avec un robot sur la face interne du panneau externe 2, et l'applicateur de colle du robot peut accéder de façon très facile aux différentes positions de la face interne et se déplacer de façon fluide le long de cette face interne du fait que le degré abrupt de la face interne est réduit par le biais de la paroi de pontet 23 ;
- on faitdéplacer l'applicateur de colle du robot sur la face interne du panneau externe 2afin de former une fixation continue de collage destinée à coller le panneau interne 1, puis on fait déplacer l'applicateur de colle du robot le long du jeu 27 qui se trouve entre la paroi de pontet 23 ou la paroi latérale 26 d'une part et la face interne de la peau 21 d'autre part, pour appliquer un cordon de colle supplémentaire destiné à étanchéifier la cavité 25 au niveau du jeu 27;
- ensuite, on presse, dans la direction principale d'assemblage du hayon, avec une pression appropriée, le panneau externe 2 et le panneau interne 1, pour assembler par collage les deux panneaux, de sorte que la colle soit compressée de façon uniforme (étalée et égalisée) sur les positions où elle est appliquée afin de former le premier cordon de colle 31 et le second cordon de colle 32 qui sont déposés l'un dessus l'autre (c'est-à-dire ils se chevauchent) et se croisent, de façon à assurer l'étanchéité à l'eau entre les panneaux interne et externe ainsi qu'au niveau du jeu 27.

La présente invention est décrite ci-avant au moyen d'un nombre limité de modes de réalisation. Cependant, un homme du métier comprend que, dans la mesure où il n'est pas porté atteinte aux principes de la présente invention, l'on peut apporter des modifications, même des modifications majeures, aux modes de réalisation décrits et à leurs détails, sans pour autant sortir de la portée de la présente invention qui n'est définie que par les revendications annexées.

## Revendications

1. Hayon en matière plastique (12) de véhicule, comprenant un panneau interne (1), un panneau externe (2) et un premier cordon de colle (31) appliqué entre le panneau interne (1) et le panneau externe (2) de manière à assembler par collage les deux panneaux et à créer entre les deux panneaux un volume intérieur étanche à l'eau, le panneau externe (2) comprenant :
- une peau (21) ayant une surface d'aspect ;
- un logement (14) pour recevoir une unité optique, qui est délimité par une paroi périphérique (22)reliée à la peau (21), et
- une cavité (25) délimitée à la fois par la peau (21), au moins une partie de la paroi périphérique (22) du logement (14) et des parois (23, 26) faisant saillie du logement (14) vers la face interne de la peau (21),
**caractérisé en ce qu'**au moins une paroi des parois (23, 26) faisant saillie du logement (14) vers la face interne de la peau (21) qui participent à délimiter la cavité (25) ne touche pas la face interne de la peau (21), de sorte qu'il existe un jeu (27) entre ladite au moins une paroi et la face interne de la peau (21), **et en ce qu'**un second cordon de colle (32) est appliqué au niveau du jeu (27) pour l'étanchéifier et ainsi assurer l'étanchéité à l'eau de la cavité (25) .

2. Hayon de véhicule selon la revendication 1, dans lequel les parois (23, 26) faisant saillie du logement (14) vers la face interne de la peau (21) qui participent à délimiter la cavité (25) comprennent une paroi de pontet (23) et une paroi latérale (26), la paroi de pontet (23) recouvrant un angle formé par le logement (14) et la face interne de la peau (21) et la paroi latérale (26) fermant la cavité (25) sur un côté de la cavité (25).

3. Hayon de véhicule selon la revendication 2, dans lequel la paroi latérale (26) se trouve sur une face latérale du hayon (12) lorsqu'un pavé mobile se déplace, lors du moulage de la cavité (25), suivant l'axe Y vers le plan médian du véhicule, ou bien se trouve sur un côté de la cavité (25) en regard de la face latérale du hayon (12) lorsque le pavé mobile se déplace, lors du moulage de la cavité (25), suivant l'axe Y vers les deux plans latéraux du véhicule.

4. Hayon de véhicule selon l'une quelconque des revendications 1 à 3, dans lequel le jeu (27) se trouve derrière ou à proximité d'une ligne de style (13) qui est visible sur la surface d'aspect de la peau (21).

5. Hayon de véhicule selon l'une quelconque des revendications 1 à 3, dans lequel le premier cordon de colle (31) et le second cordon de colle (32) sont appliqués de telle sorte qu'ils se chevauchent et se croisent, et leur ordre ascendant et descendant du chevauchement peut être interchangeable.

6. Hayon de véhicule selon l'une quelconque des revendications 1 à 3, dans lequel le premier cordon de colle (31) est appliqué à la face interne du panneau externe (2) et forme une fixation continue d'étanchéité.

7. Hayon de véhicule selon l'une quelconque des revendications 1 à 3, dans lequel le premier cordon de colle (31) et le second cordon de colle (32) sont formés en colle étanche à l'eau appliquée par un robot.

8. Hayon de véhicule selon l'une quelconque des revendications 1 à 3, dans lequel une épaisseur d'une extrémité libre de ladite au moins une paroi qui ne touche pas la face interne de la peau (21) est amincie pour faciliter un passage du second cordon de colle (32) sous l'extrémité libre, de manière à assurer l'étanchéité à l'eau de part et d'autre de ladite au moins une paroi.

9. Hayon de véhicule selon l'une quelconque des revendications 1 à 3, dans lequel une extrémité libre de ladite au moins une paroi qui ne touche pas la face interne de la peau (21) forme une rainure pour recevoir le second cordon de colle (32).

10. Procédé pour fabrication d'un hayon de véhicule selon l'une quelconque des revendications 1 à 9, dans lequel l'on utilise un pavé mobile dans un moule pour fabriquer la cavité (25) lors du moulage du panneau externe (2), et on constitue le hayon (12) en assemblant par collage le panneau externe (2) avec le panneau interne (1) au moyen des principales étapes suivantes :
- on applique une colle sur la face interne du panneau externe (2) pour former le premier cordon de colle (31) ;
- on applique la colle le long du jeu (27) pour former le second cordon de colle (32) ;
- on presse dans une direction principale d'assemblage du hayon (12), avec une pression appropriée, le panneau externe (2) et le panneau interne (1), pour les assembler par collage.

## Patentansprüche

1. Fahrzeug-Heckklappe (12) aus Kunststoff, umfassend ein inneres Paneel (1), ein äußeres Paneel (2) und einen ersten Klebstoffstrang (31), der zwischen dem inneren Paneel (1) und dem äußeren Paneel (2) so aufgetragen ist, dass die zwei Paneele durch Verkleben zusammengefügt werden und zwischen den zwei Paneelen ein wasserdichtes Innenvolumen geschaffen wird, wobei das äußere Paneel (2) umfasst:
- eine Haut (21), die eine Erscheinungsoberfläche aufweist;
- eine Aufnahme (14), um eine optische Einheit aufzunehmen, die durch eine umlaufende Wand (22), die mit der Haut (21) verbunden ist, begrenzt wird, und
- eine Vertiefung (25), die gleichzeitig durch die Haut (21), wenigstens einen Teil der umlaufenden Wand (22) der Aufnahme (14) und Wände (23, 26), die über die Aufnahme (14) zu der Innenfläche der Haut (21) hin überstehen, begrenzt wird,
**dadurch gekennzeichnet, dass** wenigstens eine Wand der Wände (23, 26), die über die Aufnahme (14) zu der Innenseite der Haut (21) hin überstehen und an der Begrenzung der Vertiefung (25) beteiligt sind, die Innenfläche der Haut (21) nicht berührt, so dass ein Spiel (27) zwischen der wenigstens einen Wand und der Innenfläche der Haut (21) vorhanden ist, und dadurch, dass ein zweiter Klebstoffstrang (32) im Bereich des Spiels (27) aufgetragen ist, um die Vertiefung (25) abzudichten und so deren Wasserdichtigkeit sicherzustellen.

2. Fahrzeug-Heckklappe nach Anspruch 1, wobei die Wände (23, 26), die über die Aufnahme (14) zu der Innenfläche der Haut (21) hin überstehen und an der Begrenzung der Vertiefung (25) beteiligt sind, eine Stegwand (23) und eine Seitenwand (26) umfassen, wobei die Stegwand (23) einen Winkel abdeckt, der von der Aufnahme (14) und der Innenfläche der Haut (21) gebildet ist, und die Seitenwand (26) die Vertiefung (25) auf einer Seite der Vertiefung (25) schließt.

3. Fahrzeug-Heckklappe nach Anspruch 2, wobei die Seitenwand (26) sich auf einer Seitenfläche der Heckklappe (12) befindet, wenn ein beweglicher Block sich, beim Formen der Vertiefung (25), gemäß der Y-Achse zu der Mittelebene des Fahrzeugs hin bewegt, oder sich auf einer Seite der Vertiefung (25) der Seitenfläche der Heckklappe (12) zugewandt befindet, wenn der bewegliche Block sich, beim Formen der Vertiefung (25), gemäß der Y-Achse zu den zwei Seitenebenen des Fahrzeugs hin bewegt.

4. Fahrzeug-Heckklappe nach einem der Ansprüche 1 bis 3, wobei das Spiel (27) sich hinter oder in der Nähe einer Designlinie (13) befindet, die auf der Erscheinungsoberfläche der Haut (21) zu sehen ist.

5. Fahrzeug-Heckklappe nach einem der Ansprüche 1 bis 3, wobei der erste Klebstoffstrang (31) und der zweite Klebstoffstrang (32) so aufgetragen sind, dass sie sich überlappen und sich kreuzen und ihre aufsteigende oder absteigende Reihenfolge der Überlappung austauschbar ist.

6. Fahrzeug-Heckklappe nach einem der Ansprüche 1 bis 3, wobei der erste Klebstoffstrang (31) auf der Innenfläche des äußeren Paneels (2) aufgetragen ist und eine durchgängige Abdichtungsfixierung bildet.

7. Fahrzeug-Heckklappe nach einem der Ansprüche 1 bis 3, wobei der erste Klebstoffstrang (31) und der zweite Klebstoffstrang (32) aus einem wasserdichten Klebstoff gebildet sind, der von einem Roboter aufgetragen wird.

8. Fahrzeug-Heckklappe nach einem der Ansprüche 1 bis 3, wobei eine Dicke eines freien Endes der wenigstens einen Wand, welche die Innenfläche der Haut (21) nicht berührt, verdünnt ist, um einen Durchtritt des zweiten Klebstoffstrangs (32) unter dem freien Ende zu erleichtern, so dass die Wasserdichtigkeit beiderseits der wenigstens einen Wand sichergestellt wird.

9. Fahrzeug-Heckklappe nach einem der Ansprüche 1 bis 3, wobei ein freies Ende der wenigstens einen Wand, welche die Innenfläche der Haut (21) nicht berührt, eine Nut bildet, um den zweiten Klebstoffstrang (32) aufzunehmen

10. Verfahren zum Herstellen einer Fahrzeug-Heckklappe nach einem der Ansprüche 1 bis 9, wobei ein beweglicher Block in einem Formwerkzeug verwendet wird, um die Vertiefung (25) beim Formen des äußeren Paneels (2) herzustellen, und die Heckklappe (12) gebildet wird, in dem das äußere Paneel (2) mit dem inneren Paneel (1) mit Hilfe der folgenden Hauptschritte durch Verkleben zusammengefügt wird,
- Auftragen eines Klebstoffs auf der Innenfläche des äußeren Paneels (2), um den ersten Klebstoffstrang (31) zu bilden;
- Auftragen des Klebstoffs entlang des Spiels (27), um den zweiten Klebstoffstrang (32) zu bilden;
- Verpressen in einer Hauptfügerichtung der Heckklappe (12), mit einem geeigneten Druck, des äußeren Paneels (2) und des inneren Paneels (1), um sie durch Verkleben zusammenzufügen.

## Claims

1. Vehicle tailgate (12) made from plastic material, comprising an inner panel (1), an outer panel (2) and a first glue bead (31) applied between the inner panel (1) and the outer panel (2) so as to assemble the two panels by gluing and create a watertight interior space between the two panels, the outer panel (2) comprising:
- a skin (21) having a visible surface;
- a housing (14) for receiving an optical unit which is delimited by a peripheral wall (22) joined to the skin (21), and
- a cavity (25) delimited by both the skin (21) and at least a part of the peripheral wall (22) of the housing (14) as well as walls (23, 26) projecting out from the housing (14) towards the inner face of the skin (21),
**characterised in that** at least one wall of the walls (23, 26) projecting out from the housing (14) towards the inner face of the skin (21) which participate in delimiting the cavity (25) does not touch the inner face of the skin (21) so that a gap (27) exists between said at least one wall and the inner face of the skin (21), and **in that** a second glue bead (21) is applied on a level with the gap (27) in order to seal it and make the cavity (25) watertight.

2. Vehicle tailgate as claimed in claim 1, wherein the walls (23, 26) projecting out from the housing (14) towards the inner face of the skin (21) which participate in delimiting the cavity (25) comprise a bridging wall (23) and a side wall (26), the bridging wall (23) covering an angle formed by the housing (14) and the inner face of the skin (21) and the side wall (26) closing the cavity (25) on one side of the cavity (25).

3. Vehicle tailgate as claimed in claim 2, wherein the side wall (26) is located on a side face of the tailgate (12) when a movable block moves along the Y axis towards the median plane of the vehicle during the process of moulding the cavity (25) or is located on a side of the cavity (25) opposite the side face of the tailgate (12) when the movable block moves along the Y axis towards the two side planes of the vehicle during the process of moulding the cavity (25).

4. Vehicle tailgate as claimed in any one of claims 1 to 3, wherein the gap (27) is located behind or close to a style line (13) which is visible on the visible surface of the skin (21).

5. Vehicle tailgate as claimed in any one of claims 1 to 3, wherein the first glue bead (31) and the second glue bead (32) are applied in such a way that they overlap and cross one another and the up and down order in which they overlap may be interchangeable.

6. Vehicle tailgate as claimed in any one of claims 1 to 3, wherein the first glue bead (31) is applied to the inner face of the outer panel (2) and forms a continuous tight bond.

7. Vehicle tailgate as claimed in any one of claims 1 to 3, wherein the first glue bead (31) and the second glue bead (32) are formed using watertight glue applied by a robot.

8. Vehicle tailgate as claimed in any one of claims 1 to 3, wherein a thickness of a free end of said at least one wall that does not touch the inner face of the skin (21) is reduced to facilitate passage of the second glue bead (32) under the free end in order to ensure that said at least one wall is watertight on both sides.

9. Vehicle tailgate as claimed in any one of claims 1 to 3, wherein a free end of said at least one wall that does not touch the inner face of the skin (21) forms a groove for receiving the second glue bead (32).

10. Method for manufacturing a vehicle tailgate as claimed in any one of claims 1 to 9, wherein a block movable in a mould is used to manufacture the cavity (25) during the process of moulding the outer panel (2), and the tailgate (12) is obtained by assembling the outer panel (2) with the inner panel (1) by gluing by means of the following main steps:
- a glue is applied to the inner face of the outer panel (2) to form the first glue bead (31);
- glue is applied along the gap (27) to form the second glue bead (32);
- the outer panel (2) and the inner panel (1) are pressed with a suitable pressure in a main direction of assembly of the tailgate (12) in order to assemble them by gluing.
